# FASCICULE DE BREVET EUROPEEN

(11) **EP 1 688 072 B1**
(45) Date de publication et mention de la délivrance du brevet: **09.04.2008**
(21) Numéro de dépôt: 05100839.9
(22) Date de dépôt: 07.02.2005
(51) Int. Cl.: A47J 31/06, A47J 31/40

(54) **Dispositif pour la préparation d'une boisson à partir d'une capsule par injection d'un fluide sous pression**
Vorrichtung zur Herstellung eines Getränks aus einer Kapsel durch Einspritzen einer unter Druck stehenden Flüssigkeit
Device for preparing a beverage from a capsule by injecting a pressurized fluid

(43) Date de publication de la demande: 09.08.2006
(73) Titulaire: Nestec S.A., 1800 Vevey (CH)
(72) Inventeur: Mandralis, Zenon Ioannis, 1071 Chexbres (CH); Yoakim, Alfred, 1806 St-Légier-La Chiesaz (CH); Denisart, Jean-Paul, 1093 La Conversion (CH); Denisart, Jean-Luc, 1096 Cully (CH)
(74) Mandataire: Ducreux, Marie

(56) Documents cités:
- EP-A- 1 440 638
- FR-A- 2 842 092

## Description

La présente invention se rapporte à un dispositif pour la préparation d'une boisson, en particulier, un dispositif utilisant une capsule contenant un ou plusieurs ingrédients alimentaires pour la préparation d'une boisson. L'invention concerne aussi à un distributeur de boissons utilisant un tel dispositif.

L'utilisation de capsules contenant une substance pour préparer une boisson froide ou chaude par extraction ou mélange avec un fluide sous pression introduit dans la capsule, tel que de l'eau, est connue notamment pour produire un café de type espresso, café long, cappuccino, latte, machiatto, thé ou chocolat, et s'avère intéressante, en particulier, pour des raisons d'hygiène, de fraîcheur, de conservation des ingrédients et de facilité d'utilisation.

Il existe différents types de machines permettant de préparer des boissons à partir de capsules fermées ou perméables contenant une substance à extraire telle que du café moulu ou thé, ou une substance à dissoudre ou à disperser comme du café soluble, du chocolat, du lait ou un mélange ou une simple association de ces substances. En général, le fluide pour l'extraction ou la dissolution de la substance est injecté dans la capsule au travers d'une paroi; l'extrait ou mélange est ensuite formé dans l'enceinte de la capsule et il s'écoule ensuite sous forme d'une boisson au travers d'un ou plusieurs orifices. L'injection peut se faire par un injecteur qui perce une membrane de la capsule ou qui s'introduit dans un orifice d'entrée préformé d'une paroi de la capsule. La boisson s'écoule hors de la capsule lorsqu'une certaine pression est atteinte dans l'enceinte de la capsule. La capsule peut ainsi coopérer avec des moyens permettant de retarder l'écoulement, comme soit des moyens d'ouverture qui ouvrent une paroi de la capsule; par exemple, des reliefs contre une membrane de sortie, ou soit encore une paroi filtrante située entre l'enceinte et l'orifice d'écoulement.

La demande de brevet WO 03/059778 se rapporte à une capsule contenant un ou plusieurs ingrédients qui s'ouvrent par des moyens d'ouverture s'engageant avec des moyens de retenue de la boisson sous l'effet de la montée en pression dans la capsule. Une telle capsule présente entre autres avantages: i) la possibilité de distribuer des boissons de différentes natures "sans contamination croisée"; c'est à dire sans qu'une première boisson distribuée ne transmette une ou plusieurs caractéristiques non désirées, telle qu'une saveur, couleur et/ou odeur, à une seconde boisson distribuée après la première, ii) la flexibilité de concevoir des capsules mieux adaptées aux ingrédients et produits à distribuer, iii) un meilleur contrôle et répétitivité des conditions d'extraction ou de mélange, iv) une simplification significative de la machine de distribution.

Un inconvénient des systèmes de préparation de boissons connus à partir d'une capsule provient de ce qu'ils ne sont généralement pas conçus pour recevoir des capsules de différentes formes, tailles et/ou nécessitant des adaptations particulières liées, par exemple, au mode d'injection du fluide dans la capsule.

Par exemple, une capsule contenant un mélange pour cappuccino à dissoudre nécessite un plus large volume, du fait que le lait en poudre qu'elle contient prend beaucoup plus de place qu'une capsule contenant du café moulu pour un café espresso, ou encore un café soluble pour un café long. Au contraire, un café ou thé soluble a, en général, besoin de moins de place de stockage. D'autre part, certains produits solubles, bien que n'occupant pas nécessairement un volume important, doivent quand même être dissout dans une chambre de taille suffisante contenant du gaz afin d'emmagasiner suffisamment de ce gaz pour créer de la mousse. Afin de réduire les coûts d'emballage et tenir compte des caractéristiques ou attributs des boissons à distribuer (par exemple, une boisson avec mousse ou sans mousse), il est donc préférable de concevoir des capsules dont la taille est adaptée aux ingrédients contenus et/ou aux boissons préparées.

Il est aussi connu que les conditions d'injection influencent considérablement la qualité de la boisson produite. Selon que l'on considère une substance issue d'une mouture ou bien une substance à dissoudre ou à disperser dans un liquide telle que du café soluble ou une substance à base de lait telle que du cappuccino, chocolat ou autre, ou encore une substance à infuser telle que du thé; la façon dont l'eau est amenée et circule dans la capsule peut avoir une influence considérable sur la qualité de la boisson finale produite. Or, les dispositif connus ne sont généralement pas conçus pour adapter ou modifier les conditions d'injection en fonction des types de boissons à produire.

Un autre inconvénient des dispositifs connus provient de ce que les moyens d'injection peuvent s'encrasser et/ou s'entartrer rapidement et modifier ainsi les caractéristiques d'injection (comme par exemple réduire le débit, augmenter les pertes de charge, modifier la direction du jet, etc.) et donc affecter ainsi la qualité et/ou les attributs de la boisson. Or, ces moyens sont rarement accessibles à l'utilisateur. L'utilisateur peut donc difficilement diagnostiquer la cause du problème et peut aussi difficilement y remédier.

La demande de brevet EP 1 440 638 se rapporte à une machine pour la préparation d'une boisson utilisant des capsules; la machine comprenant un premier élément de perçage formant un orifice d'entrée et un second élément de perçage formant un orifice de sortie; les orifices étant formés lors de l'utilisation de la capsule; les deux éléments de perçage étant formés dans une unité amovible unique. Une telle configuration vise seulement à faciliter le nettoyage des éléments de perçage.

La demande de brevet WO 2004/0006740 se rapporte à une machine à café fonctionnant avec des doses qui comprend un support ayant deux empreintes disposées côte à côte pour recevoir deux doses différentes. Les empreintes ont des assises annulaires de diamètres différents, sont décalées en hauteur, correspondant chacune aux dimensions de la surface plane d'assise d'une dose. Dans ce cas, on a seulement le choix entre deux volumes différents de capsules. Un tel système est aussi relativement complexe.

La demande FR2842092 se rapporte à une machine à café fonctionnant avec des doses comprenant des aiguilles montées par l'intermédiaire d'une platine porte-aiguille à une base de montage.

L'un des objets de la présente invention est de pallier les inconvénients des dispositifs de l'art antérieur.

Plus particulièrement, un objet est de concevoir un système qui soit mieux adapté à recevoir des capsules de formes, tailles et/ou nécessitant des configurations d'injection particulières liées à la nature des ingrédients et/ou des boissons à produire.

Un autre objet est de faciliter l'accès de l'utilisateur aux moyens d'injection, et de faciliter le nettoyage et/ou le détartrage des moyens d'injection du dispositif.

Pour cela, l'invention concerne un dispositif pour la préparation d'une boisson à partir d'une capsule par injection d'un fluide sous pression dans la capsule comprenant une unité d'alimentation en fluide et un injecteur du fluide dans la capsule; caractérisé en ce que l'injecteur est dissociable de l'unité d'alimentation en fluide et en ce que le dispositif comprend un porte-capsule configuré pour recevoir une capsule et en ce que le porte-capsule est amovible par rapport à l'unité d'alimentation. d'injection, ou éventuellement, encore d'autres intéractions fonctionnelles possibles entre la capsule et le porte-capsule.

Par "dissociable", on entend que l'injecteur peut être séparé de l'unité d'alimentation lorsque le porte-capsule est désengagé de l'unité d'alimentation. La séparation peut s'effectuer soit comme résultant de l'action même de séparation du porte-capsule par rapport à l'unité d'alimentation, soit manuellement en agissant sur l'injecteur lui-même.

On comprendra que dans le contexte de l'invention, le terme "capsule" signifie un emballage, conteneur, sachet ou réceptacle, jetable ou recyclable, qui contient un ou plusieurs ingrédients, flexible, partiellement rigide ou totalement rigide.

La capsule selon l'invention peut contenir un ou plusieurs ingrédients adapté pour la production d'une boisson. La boisson peut être, par exemple, un café, thé, chocolat, ou une boisson à base de lait. Les ingrédients peuvent être sous forme de poudre, de mouture, d'infusion, de liquide ou gel ou encore une combinaison de ces formes d'ingrédients.

Dans un aspect de l'invention, l'injecteur comprend au moins un orifice d'injection pour injecter au moins un jet de fluide dans la capsule. L'injecteur peut prendre des formes variées en fonction du mode d'injection désiré.

Dans certains cas, l'injecteur peut comprendre un moyen de perforation qui peut être une ou plusieurs pointes, ou lames, ou autres éléments tranchants, coupants ou déchirants, configuré pour agir sur une paroi rigide, semi-rigide ou souple de la capsule afin de créer un ou plusieurs ports d'entrée dans la capsule pour l'introduction d'au moins un orifice d'injection de fluide de l'injecteur. Dans d'autres cas, l'injecteur comprend un collecteur de fluide ménagé dans une paroi; lequel collecteur débouche sur un ou plusieurs orifices d'injection.

L'injecteur est choisi en fonction des conditions d'injection souhaitée; lorsque, par exemple, une boisson différente est désirée soit à partir d'une même capsule soit à partir d'une capsule différente.

Par exemple, un injecteur peut être utilisé pour produire un jet proprement dirigé et à haute vitesse dans l'enceinte de la capsule, afin de favoriser les turbulences, lorsque la capsule contient des ingrédients à dissoudre et/ou encore pour former une boisson moussante. Au contraire, un autre injecteur pourra être utilisé, par exemple, qui soit configuré pour produire une distribution de fluide plus diffuse et à vitesse de sortie plus lente, par exemple, lorsque la capsule contient un lit d'une mouture telle que du café moulu de façon à bien mouiller les ingrédients et à produire un café de type espresso ou café long.

Dans un premier mode, l'injecteur fait partie du, ou est rapporté au, porte-capsule. Ainsi, lorsque le porte-capsule est désolidarisé de l'unité d'alimentation en fluide, l'injecteur est par voie de conséquence aussi dissocié de l'unité d'alimentation en fluide. Ceci présente plusieurs avantages supplémentaires. L'injecteur peut être ainsi parfaitement adapté au type particulier de porte-capsule, donc à un type de capsule apte à être reçue dans le porte-capsule, sans que l'utilisateur n'ait à se soucier quel injecteur utiliser pour un porte-capsule ou une capsule donnée. Autrement dit, ceci offre la possibilité d'associer un couple adapté: un porte-capsule et un injecteur, en fonction de la boisson à produire.

Par exemple, une capsule contenant un produit à dissoudre tel qu'un mélange de poudre de café ou de lait, pour la réalisation d'un cappuccino, nécessite un logement de porte-capsule de grande taille et un injecteur produisant un jet dirigé et à haute vitesse. Une capsule contenant un produit à extraire, tel qu'un café moulu, pour la réalisation d'un café espresso, ou long, nécessite un volume de porte-capsule plus petit et un injecteur produisant un ou plusieurs jets plus diffus et à vitesse plus lente. Les possibilités offertes de configurer porte-capsule/injecteur sont donc variées et dépendent bien entendu des caractéristiques recherchées pour les boissons à produire.

Dans un autre mode de réalisation, l'injecteur fait partie de, ou est rapporté à, l'unité d'alimentation en fluide. Dans ce cas, l'injecteur peut être directement associé à l'unité d'alimentation. Seuls les avantages sur la flexibilité offerte par les changements possibles ou l'interchangeabilité du porte-capsule sont alors obtenus. Toutefois, un tel mode possède l'avantage d'une plus simple conception du porte-capsule. On réduit aussi les possibles inconvénients ou petits risques liés à la manipulation de l'injecteur comme les risques de piqûres ou autres petites blessures accidentelles.

L'injecteur est préférablement configurable sur le porte-capsule dans une position de référence par rapport à la capsule qui correspond à la position d'injection dans la capsule. Ainsi, l'injecteur est configurable sur le porte-capsule dans une position de référence par rapport à la capsule qui correspond à la position d'injection. Ainsi, on assure que l'injecteur est en position correcte par rapport à la capsule elle-même. Ainsi, l'utilisateur n'a pas à se soucier de la façon correcte pour disposer l'injecteur par rapport à la capsule. Des moyens de positionnement sont alors prévus pour placer l'injecteur en position d'injection, avant ou pendant la liaison entre le porte-capsule et les moyens d'alimentation en fluide. On empêche ainsi tout risque de mauvaise association entre l'injecteur et l'unité d'alimentation lorsque le porte-capsule et l'unité d'alimentation sont assemblés pour préparer une boisson.

Plus particulièrement, selon un aspect possible, l'injecteur fait partie d'un système d'injection sur le porte-capsule qui le rend mobile entre une position dégagée et une position d'injection dans la capsule. Dans la position dégagée de l'injecteur, une capsule peut être librement positionnée dans le porte-capsule. Puis, l'injecteur peut passer en position d'injection. En particulier, en position d'injection, le moyen de perçage est engagé en percement dans la capsule et l'orifice d'injection est alors correctement introduit et disposé dans l'enceinte de la capsule.

Dans un mode possible, le système d'injection comprend
- une pièce de support de l'injecteur qui est montée en rotation sur le bord du logement du porte-capsule;
- un moyen élastique qui maintient ladite pièce de support en position d'injection;
- un moyen d'actionnement pour déplacer la pièce de support et l'injecteur en position dégagée à l'encontre de l'action du moyen élastique.

Ainsi, l'injecteur est automatiquement positionné en position d'injection après qu'une capsule ait été mise en place dans le porte-capsule; c'est à dire, dès que le moyen d'actionnement est relâché; de sorte que le moyen élastique force la pièce de support à placer l'injecteur en position d'injection contre la capsule. Par exemple, le système et son moyen élastique sont configurés pour rabattre, par la force de rappel créée, la pièce de support de l'injecteur contre la surface à percer de la capsule; obligeant ainsi l'injecteur à percer ladite surface.

Quant à l'injecteur; il se raccorde, en général, de manière étanche à l'unité d'alimentation en fluide par déplacement relatif d'une partie au moins de l'unité d'alimentation et de l'injecteur. L'unité d'alimentation comprend une portion de sortie de fluide qui s'engage alors en appui contre une portion d'entrée de fluide de l'injecteur. Le raccordement se fait donc préférentiellement par simple liaison libre et par la force de contact entre l'unité d'alimentation et l'injecteur. Un tel raccordement simplifie donc considérablement le dispositif. Il rend aussi l'injecteur automatiquement dissociable de l'unité dès que la force de contact est relâchée; c'est à dire lorsque le porte-capsule amovible est simplement séparé de l'unité d'alimentation par exemple lors du remplacement d'une capsule usagée par une nouvelle capsule.

Dans un exemple avantageux, l'injecteur comprend une portion d'entrée de fluide sensiblement tronconique et l'unité d'alimentation de fluide comprend une portion complémentaire de sortie de fluide sensiblement tronconique qui s'engage contre la portion d'entrée de fluide de l'injecteur. On obtient donc une liaison libre de type cône sur cône sans moyen de connexion additionnel. Un moyen d'étanchéité supplémentaire peut être utilisé comme un ou plusieurs joints, comme un joint torique ou d'autres. D'autres agencement de surfaces sont toutefois envisageables et à la portée de l'homme de l'art sans sortir du cadre de l'invention.

Selon un aspect de l'invention, le porte-capsule comprend un élément allongé formant un manche. De ce fait, l'insertion manuelle du porte-capsule dans l'unité d'alimentation en fluide est plus aisée.

Ainsi, selon un mode possible, le porte-capsule et l'unité d'alimentation comprennent des moyens d'engagement complémentaires permettant un pré-positionnement du porte-capsule dans l'unité d'alimentation dans une configuration où l'injecteur est placé en position de référence par rapport aux moyens d'alimentation en fluide de l'unité d'alimentation. Ce pré-positionnement permet de configurer la position de référence propre de l'injecteur par référence aux moyens d'alimentation contre lesquels il est prévu de se rattacher. Les moyens d'alimentation sont aussi déplacés pour effectuer l'association des moyens d'alimentation avec l'injecteur proprement-dit.

Par exemple, les moyens d'engagement complémentaires du porte-capsule et de l'unité d'alimentation peuvent comprendre un ensemble complémentaire de bords et de nervures de guidage. Le pré-positionnement du porte-capsule dans l'unité d'alimentation consiste par exemple à insérer le porte-capsule par glissement du porte-capsule selon l'assemblage de bords-nervures dans une direction privilégiée. L'insertion par glissement est facile à mettre en oeuvre par l'utilisateur, fiable et ne réclame par de force particulière.

Plus particulièrement, l'unité d'alimentation comprend une base de guidage dans laquelle coopère le porte-capsule en insertion jusqu'à la position de référence des moyens d'alimentation en fluide;
une base d'alimentation en fluide comprenant un connecteur de sortie de fluide configuré pour s'associer en connexion avec un connecteur complémentaire de l'injecteur;
ladite base d'alimentation étant mobile relativement à la base de guidage d'une position désengagée des connecteurs à une position d'étanchéité engagée des connecteurs. Une telle configuration de l'unité en deux parties distinctes: une base d'alimentation et une base de guidage a pour avantage de faciliter le positionnement du porte-capsule en deux temps; un premier temps pour l'insertion par glissement du porte-capsule jusqu'au prépositionnement correct de l'injecteur, un deuxième temps pour associer les moyens d'alimentation à l'injecteur une fois le porte-capsule et l'injecteur en position de référence. Ces deux temps sont faciles à exécuter par un utilisateur d'attention moyenne.

Selon un mode particulier, la base d'alimentation en fluide de l'unité d'alimentation est ainsi articulée à la base de guidage par des moyens à genouillère; de telle façon qu'un appui dans une direction privilégiée et distincte de la position d'insertion du porte-capsule établi sur le porte-capsule provoque la fermeture de ladite base d'alimentation relativement à ladite base de guidage dans la position engagée des connecteurs et donc de fermeture de l'unité d'alimentation contre le porte-capsule. Les moyens employés, notamment à genouillère, pour provoquer le fermeture de la base d'alimentation contre le porte-capsule sont fiables d'utilisation. Ils assurent un engagement précis et répétitif sur un grand nombre de cycles des différentes pièces entre elles.

L'invention se rapporte aussi à un distributeur de boissons comprenant un dispositif selon l'une quelconque des revendication précédentes.

L'invention sera mieux comprise à l'étude des modes de réalisation pris à titre d'exemples non-limitatifs de l'invention et illustrés dans les figures qui annexées dans lesquelles:
La figure 1 représente une vue en perspective un distributeur comprenant un dispositif de préparation selon l'invention;
La figure 2 montre une vue en perspective du dispositif de préparation avant insertion du porte-capsule dans l'unité d'alimentation en fluide;
La figure 3 montre une vue en perspective du porte-capsule lui-même et d'une capsule lors de son placement dans le porte-capsule;
La figure 4 montre une vue en perspective du porte-capsule et d'une capsule placée dans le porte-capsule;
La figure 5 montre une vue en coupe longitudinale du porte-capsule de la figure 4;
La figure 6 montre une vue de détail de l'injecteur du porte-capsule;
La figure 7 montre une vue éclatée de l'unité de réception;
La figure 8 montre une vue en coupe du dispositif de préparation en position de fermeture lorsque l'unité d'alimentation est raccordée à l'injecteur;
La figure 9 montre l'introduction du porte-capsule dans l'unité d'alimentation de fluide avant fermeture et raccordement à l'injecteur;
La figure 10 montre la fermeture de l'unité d'alimentation et le raccordement à l'injecteur;
La figure 11 montre une vue en perspective d'une variante du porte-capsule dans lequel est logée une capsule de taille différente par rapport à la taille du mode précédent;
La figure 12 montre une vue en coupe du porte-capsule de la figure 11;
La figure 13 montre un détail de l'injecteur du porte-capsule de la figure 12;
La figure 14 montre une vue en coupe longitudinale d'une autre variante de porte-capsule avec un autre type d'injecteur,
La figure 15 montre une vue en coupe longitudinale d'une autre variante encore de porte-capsule avec un autre type d'injecteur,
La figure 16 montre une vue en coupe longitudinale d'un porte-capsule selon une autre variante de l'invention,
La figure 17 montre une vue en coupe longitudinale d'un dispositif selon une variante avec le porte-capsule de la figure 16 inséré dans l'unité d'alimentation.

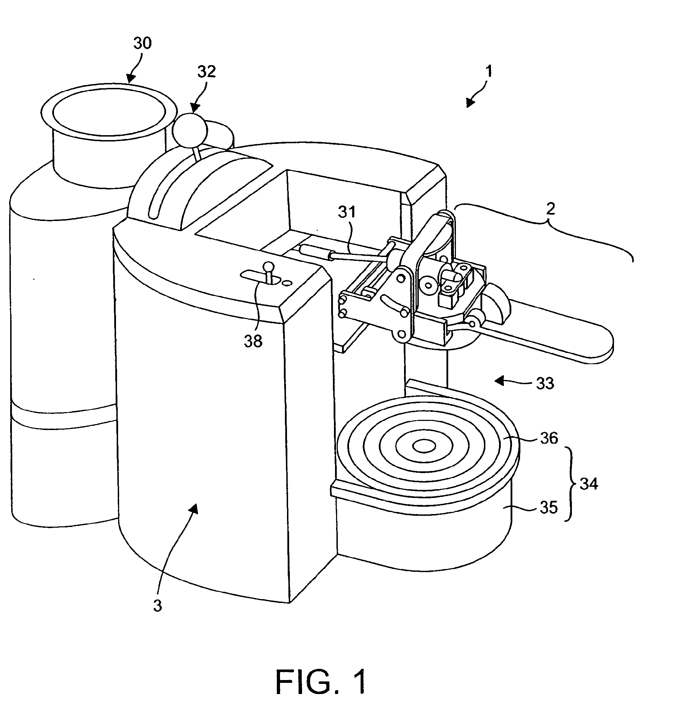

En référence à la figure 1, un mode de réalisation préférentiel d'un distributeur ou machine de distribution de boisson 1 est illustré en perspective qui comprend un dispositif ou module de préparation 2 selon l'invention. Le dispositif sera décrit plus en détail dans la suite de la présente description. Il se raccorde à un bâti 3 de la machine lequel comprend un système d'alimentation en eau, connu en soi, configuré pour alimenter le dispositif en eau sous pression comprenant un réservoir d'eau 30, tel qu'un bocal transparent, une pompe et un chauffe-eau (non visibles) à l'intérieur du bâti, un conduit d'arrivée d'eau 31 reliant la pompe et le chauffe-eau au dispositif 2. L'arrivée de l'eau dans le dispositif est contrôlée par un système d'actionnement 32 comprenant, par exemple comme connu en soi, une vanne et un levier actionnable manuellement. Tout autre système d'actionnement est envisageable comme un bouton d'arrêt associé à une vanne electro-mécanique. Une commande générale d'alimentation électrique 38 est prévue sur le bâti qui permet de mettre la machine sous tension et, par exemple, d'engager si nécessaire, le préchauffage du chauffe-eau, pour préchauffer un volume d'eau.

Généralement la machine de distribution possède une zone de distribution 33 adaptée pour recevoir un récipient. La zone s'étend verticalement entre le dispositif de préparation 2 et un support de récipient 34 muni par exemple d'un bac d'égouttage 35 et d'une grille d'écoulement 36, tous deux amovibles par rapport au bâti pour le nettoyage.

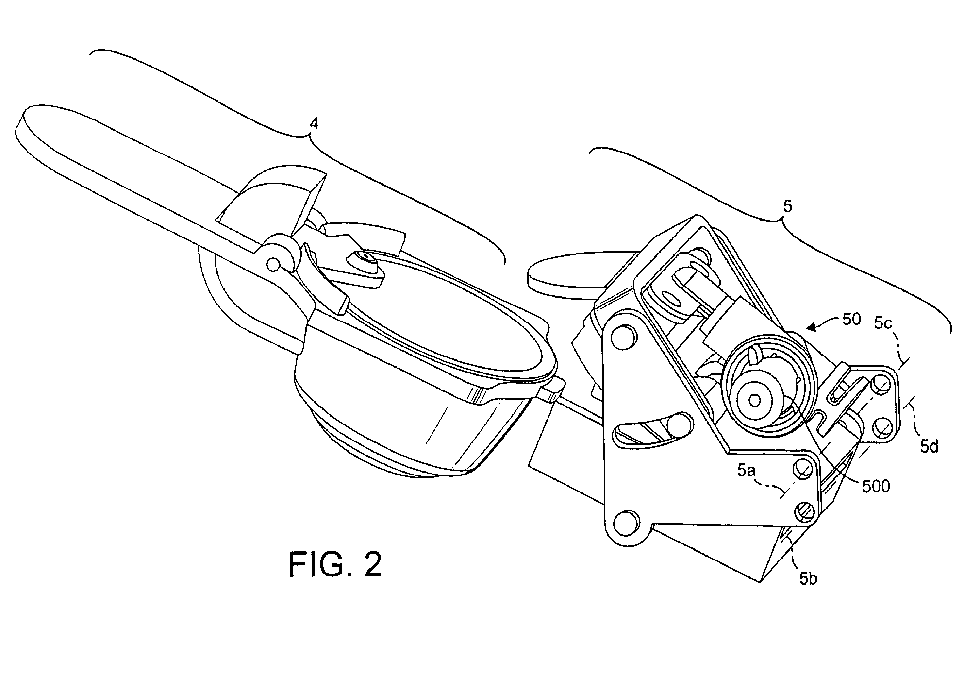

Le dispositif ou module de préparation à partir d'une capsule, proprement-dit, va maintenant être décrit en rapport avec les figures 2 à 11.

Le dispositif de préparation 2, comme le monte la figure 2, comprend d'une part un porte-capsule 4 et, d'autre part, une unité d'alimentation en fluide sous pression 5. Selon un aspect important de l'invention, le porte-capsule 4 est configuré pour s'associer à l'unité d'alimentation de manière amovible selon des moyens d'engagement complémentaires qui seront décrit plus en détail par la suite. L'unité d'alimentation 5 est, quant à elle, rattachée au bâti de la machine à la fois mécaniquement et en communication de fluide. Plus précisément, l'unité d'alimentation 5 est rattachée par des moyens mécaniques de liaison tels que des vis ou autres, au travers des axes de liaison 5a-5d. L'unité communique avec la pompe et le chauffe-eau par le conduit 31 qui se raccorde au connecteur de fluide 50 positionné au dessus de l'unité. Le connecteur de fluide 50 peut aussi comprendre une valve de contre-pression 500 qui maintient le conduit fermé en dessous d'une pression hydraulique minimale en amont de la valve.

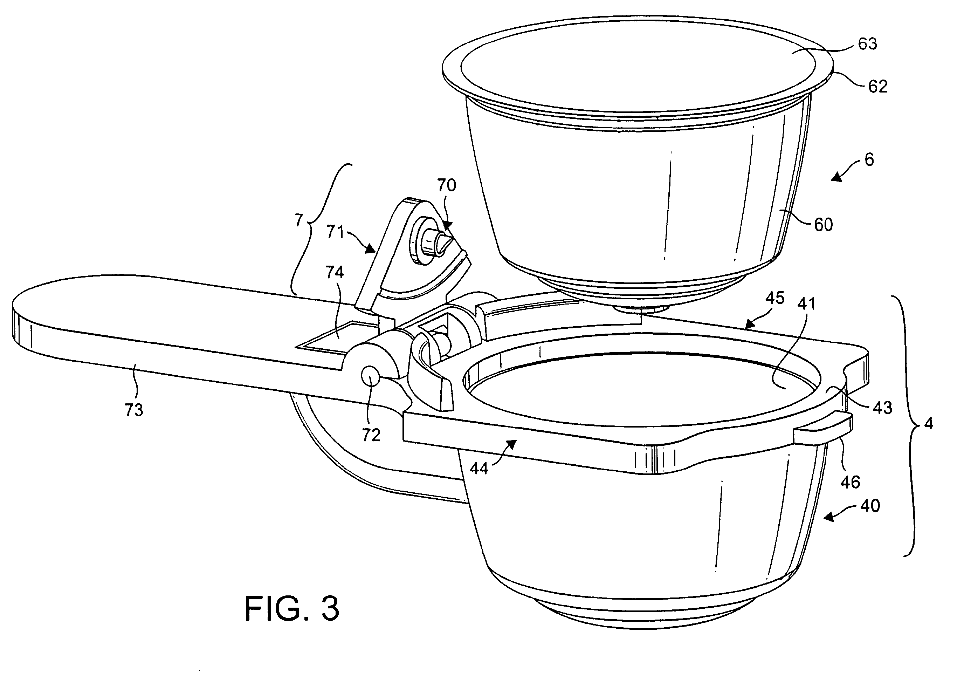

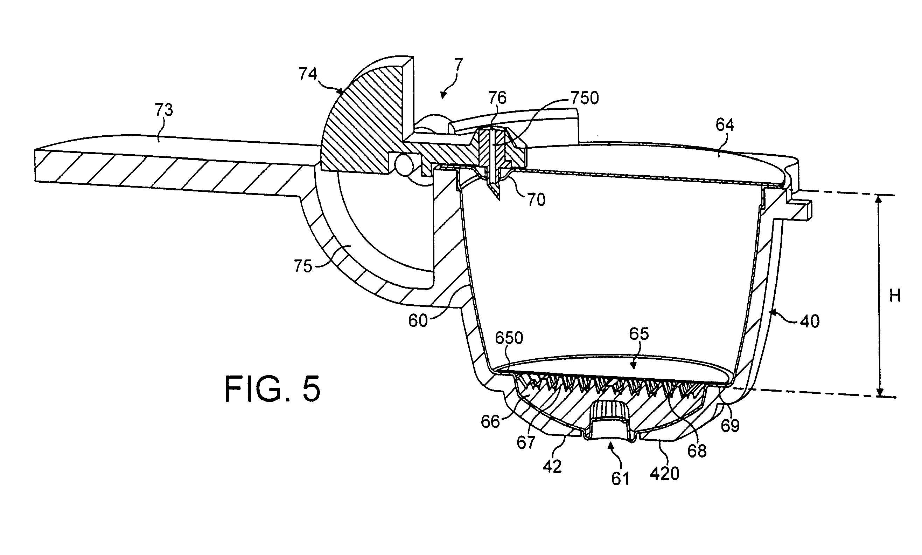

Le porte-capsule 4, en rapport avec les figures 3 à 5, est configuré pour recevoir une capsule 6. Pour cela, le porte-capsule est muni d'une coupelle 40 avec des parois munies de surfaces internes qui épousent de préférence la forme générale de la capsule. L'adaptation du porte-capsule à la forme de la capsule est visible à la figure 5. Ainsi, un corps 60 de capsule comprend des surfaces externes qui sont complémentaires des surfaces internes ou logement 41 de la coupelle. Ainsi, un type de capsule pour délivrer une boisson particulière peut être associé à un porte-capsule de configuration adaptée. Il est ainsi facile en modifiant la taille et/ou la forme de la coupelle de refuser une capsule dans le porte-capsule qui ne serait pas alors destinée à un tel porte-capsule. Ceci permet de contrôler les standards, les caractéristiques et/ou la qualité des produits distribués.

La coupelle du porte-capsule se termine vers le bas par une lumière de dégagement 42 munis de bords 420 configurés pour libérer un orifice d'écoulement 61 de la capsule. De préférence, cette lumière est configurée en taille pour éviter que ses bords 420 ne soient souillés par la boisson qui s'écoule au travers de la capsule; ce qui limite le nettoyage et réduit les risques de contamination croisée entre deux boissons. De plus, l'orifice d'écoulement 61 s'étend préférentiellement vers le bas sensiblement au delà des bords 420 de la coupelle de façon à réduire le risque de contact du liquide avec ces bords. Pour cela, les bords 420 peuvent aussi se réduire en épaisseur en comparaison à l'épaisseur des parois du reste de la coupelle 40.

Comme le montre la figure 3, la coupelle se prolonge vers le haut par des bords d'appui 43 permettant à la capsule 6 de s'appuyer par l'intermédiaire de ses bords latéraux 62. La capsule est ainsi maintenue dans le porte-capsule en position stable avec une paroi d'entrée de fluide 63, transversale, dégagée (non recouverte) vers le haut. La paroi peut être une membrane scellée sur les bords par exemple ou une paroi semi-rigide raccordée au corps par d'autres moyens. A titre indicatif, les parois du corps 60 sont typiquement réalisées en un matériau plastique choisi parmi l'ensemble comprenant le EVOH, PVDC, PP, PE, PA en monocouche ou multicouche. Le corps 60 est fermé hermétiquement par la paroi d'entrée de fluide 63, par exemple, au moyen d'un opercule qui est thermosoudé sur les bords du corps 60. L'opercule est réalisé typiquement en un matériau capable d'être perforé par des moyens de perforation, en particulier un injecteur, qui seront décrits ci-après. Le matériau de l'opercule 63 pourra être par exemple choisi parmi l'ensemble comprenant l'aluminium, un composite aluminium/polymère, cellulose/aluminium/polymère, un polymère pur monocouche ou multicouche.

Dans l'exemple représenté, on notera que la capsule 6 possède préférentiellement ses propres moyens d'ouverture configurés pour laisser passer la boisson au travers de l'orifice d'écoulement 61 dans une configuration de pressurisation de la capsule par le fluide injecté dans celle-ci. Ainsi, comme le montre la figure 5, la capsule comprend dans sa partie inférieure un film mince 65 scellé sur un rebord interne 650 du corps 60 de la capsule. Ce film 64 est disposé au dessus d'un disque 66 comportant une pluralité d'éléments en relief 67 espacés à la surface du disque et délimitant une pluralité de canaux 68 débouchant à la périphérie dudit disque. Pour une description plus détaillée de la capsule 6, on se référera à la demande internationale de brevet WO 03/059778 déposée le 13 janvier 2003 au nom de la demanderesse, sans toutefois vouloir limiter le présent dispositif à la réception d'une capsule décrite dans cette demande.

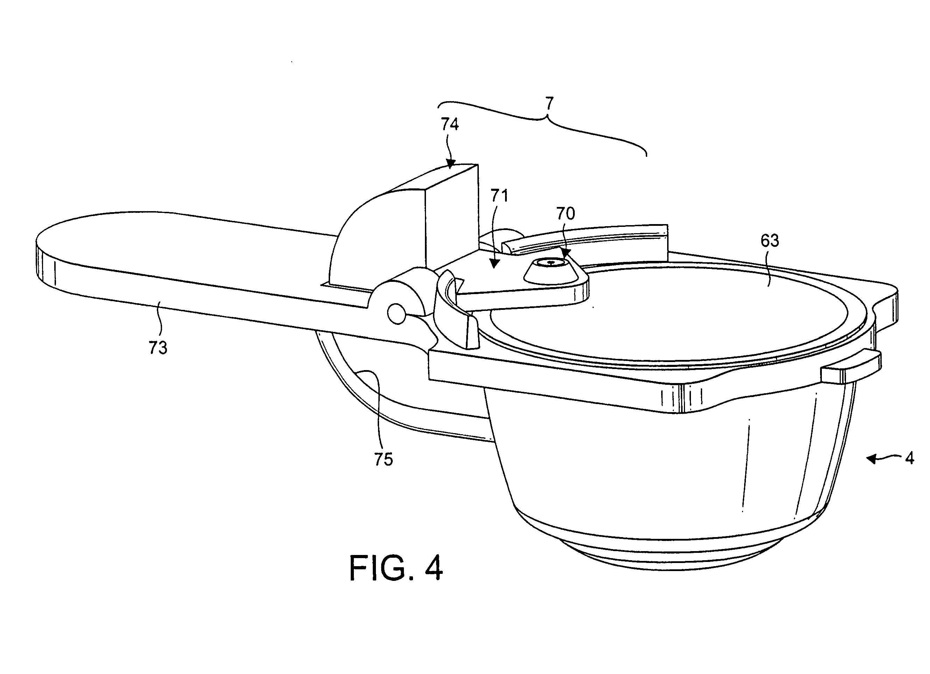

Selon un aspect de l'invention, le porte-capsule 4 et un injecteur 70 destiné à injecter le fluide sous pression dans la capsule sont associés. L'injecteur peut faire partie du porte-capsule ou être rapporté de manière dissociable à celui-ci. Dans l'exemple préférentiel illustré à la figure 3, l'injecteur est la pièce 70 qui fait partie d'un système d'injection 7 comprenant une pièce de support 71 de l'injecteur 70 monté en rotation sur un côté du bord périphérique de la coupelle 40. La pièce 71 est montée en rotation selon l'axe d'articulation 72 relié sur le côté de la coupelle. Le côté sur lequel est montée la pièce de support 71 est préférablement celui qui comprend un manche 73 pour faciliter à la fois la préhension du porte-capsule et la manipulation du système d'injection en désengagement. La pièce de support 71 peut ainsi être déplacée en position dégagée dans laquelle l'injecteur 70 est dégagé de l'ouverture de la coupelle (figure 3) pour permettre l'insertion d'une capsule dans la coupelle. Puis, la pièce de support est déplacée en rotation dans une position d'engagement dans laquelle l'injecteur s'engage en perforation de la paroi d'entrée de la capsule (figure 4).

Le système d'injection 7 possède un moyen élastique tel qu'au moins un ressort (non représenté) et un moyen d'actionnement 74 pour déplacer la pièce de support 71 et l'injecteur qui lui est solidaire à l'encontre de la force du moyen élastique dans la position dégagée pour permettre l'insertion de la capsule. Le moyen d'actionnement 74 peut être une gâchette qui est manipulée avec le pouce et s'engage dans un dégagement 75 de la partie avant du manche 73. Ainsi, lorsque la gâchette n'est pas enfoncée, le système d'injection est en position d'engagement sans risque de piqûre pour l'utilisateur.

Comme le montre la figure 3, le porte-capsule possède des bords latéraux de guidage 44, 45 en forme de nervures rectilignes s'étendant, d'une part, vers l'extérieur et, d'autre part, dans la direction d'insertion du porte-capsule dans l'unité d'alimentation. Ces bords s'étendent le long de l'ouverture de la coupelle 40 de manière à fournir une bonne assise au porte-capsule dans l'unité d'insertion. Sur le côté avant du porte-capsule peut aussi être prévu un élément de reconnaissance de forme ou clé 46 destiné à s'engager dans une forme complémentaire de l'unité d'alimentation.

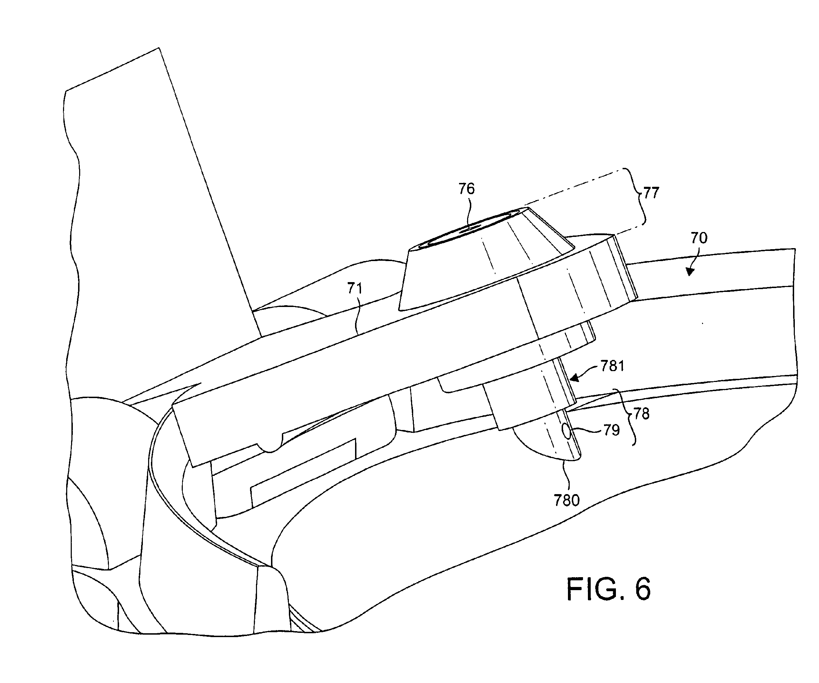

Un exemple d'injecteur est décrit en relation avec les figures 3, 5 et 6. L'injecteur comprend un orifice d'entrée 76 formée sur la face antérieure d'une portion d'entrée ou connecteur 77. La portion d'entrée ou connecteur 77 s'étend en relief sur le bord supérieur de la pièce de support 71 et est, de préférence, en forme de tronc de cône. A sa partie opposée, l'injecteur 70 se prolonge par une portion de perforation 78 qui se termine par une lame ou surface de coupe 780 permettant l'introduction de la portion par perforation au travers de la paroi d'entrée 63 et à l'intérieur de la capsule. La portion comprend aussi un ou plusieurs orifices 79 de sortie de fluide lesquels sont orientés de manière adéquate pour distribué le fluide à l'intérieur de la capsule selon une ou plusieurs directions appropriées comme le montre les figures 5 et 6. L'orifice d'entrée 76 et l'orifice de sortie 75 sont reliés par un conduit interne 750 qui traverse l'injecteur dans la direction axiale.

Le conduit interne de l'injecteur peut être dimensionné de telle sorte qu'un effet de capillarité se produise pour retenir le fluide dans le conduit lorsque la pression de fluide est stoppée. L'avantage est d'éviter à la capsule de goutter lorsque le porte-capsule est désolidarisé de l'unité d'alimentation après extraction. Le fluide est ainsi retenu dans le conduit par capillarité; ce qui empêche, en combinaison avec l'étanchéité créée entre l'injecteur et la surface de la capsule, à l'air de rentrer dans la capsule et donc au fluide contenu encore dans la capsule de s'écouler au travers de l'orifice d'écoulement 61 de la capsule. Le conduit est préférablement d'un diamètre inférieur ou égal à 0.5 mm et sa longueur d'au moins 5 mm, de préférence, plus de 8 mm.

Pour des produits solubles, le point d'injection et la direction d'injection est de préférence arrangée à distance du centre de la capsule ou de la coupelle 40 et l'axe de l'orifice de sortie du fluide est de préférence orienté selon une direction qui passe à l'écart du centre de la capsule ou de la coupelle 40. On obtient ainsi un effet de vortex qui favorise la dissolution des ingrédients solubles à l'intérieur de la capsule. Il est à noter que l'orifice d'injection pourrait être orienté différemment. Par exemple, l'orifice d'injection 79 pourrait être dans le même axe que le conduit rectiligne 750. Une telle configuration de l'orifice 79 dans le prolongement du conduit 750 peut être avantageuse pour faciliter le nettoyage du conduit en cas de bouchage ou d'entartrage par une simple aiguille ou d'autres moyens.

L'injecteur comprend aussi une portion d'étanchéité 781 laquelle forme une zone de plus grande section par rapport à la portion de perforation 78 qui lui est adjacente. La portion d'étanchéité est de préférence en matériau plus mou que le matériau de perforation pour servir de joint d'étanchéité extérieure autour de la perforation réalisée dans la paroi d'entrée 63 de la capsule. Il peut s'agir d'une bague élastomère ou silicone par exemple. L'avantage d'un tel dispositif est que l'étanchéité est faite sur une petite circonférence autour de la perforation avec la portion 781 qui s'appuie suffisamment sur la paroi de la capsule pour effectuer cette étanchéité; ce qui simplifie grandement la conception générale de l'alimentation du fluide dans la capsule. L'étanchéité ainsi produite autour de la perforation de la capsule est maintenue lorsque le porte-capsule est désolidarisé de l'unité d'alimentation en fluide; ce qui a pour effet, en combinaison avec des moyens appropriés prévus dans l'injecteur pour maintenir du fluide dans l'injecteur et éviter ainsi l'entrée d'air, d'éviter à la capsule de goutter lorsque celle-ci contient encore une quantité de fluide. Des moyens appropriés peuvent être un conduit capillaire à l'intérieur de l'injecteur ou encore une valve anti-retour qui ferme l'entrée du conduit telle qu'une valve à fente, à bille ou pointeau.

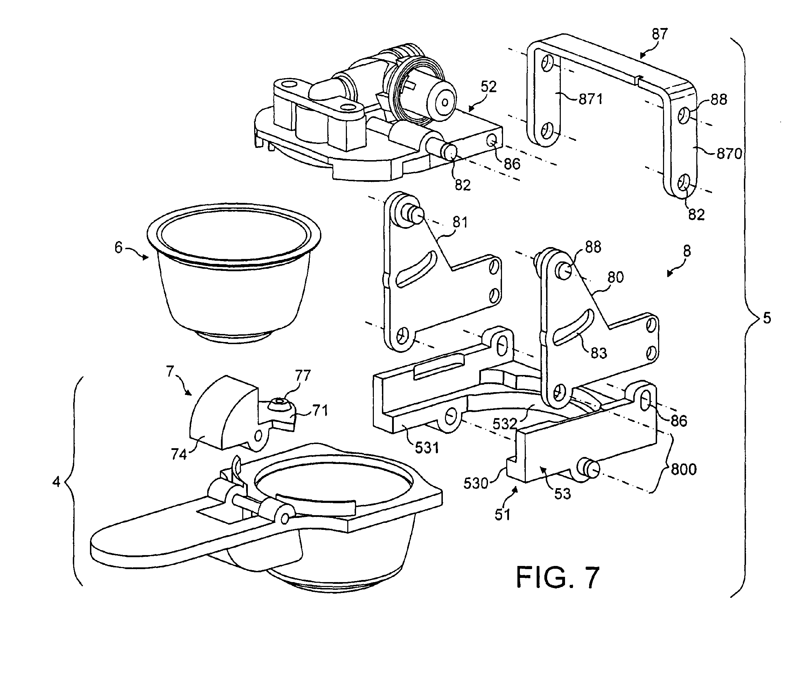

La structure de l'unité d'alimentation va maintenant être décrite en relation avec les figures 7 à 10. L'unité d'alimentation comprend une base principale de guidage et de réception 51 destinée à recevoir le porte-capsule 4 dans l'unité; une position dans laquelle l'injecteur est disposé en référence aux moyens d'alimentation en fluide de l'unité d'alimentation. L'unité d'alimentation possède ainsi une seconde partie appelée la base d'alimentation 52 qui supporte proprement-dit les moyens d'alimentation en fluide. La base de guidage 51 et la base d'alimentation 52 sont montées de manière articulée relativement l'une par rapport à l'autre de sorte que la base d'alimentation et la base de guidage peuvent prendre deux positions relatives: une position de désengagement entre l'injecteur 70 et les moyens d'alimentation en fluide et une position d'engagement entre l'injecteur 70 et les moyens d'alimentation en fluide.

La base de guidage 51 est formé, plus précisément, d'un élément de guidage en forme transversale de U, 53, dont les côtés latéraux possèdent des nervures longitudinales de guidage 530, 531 complémentaires aux bords de guidage 44, 45 du porte-capsule. L'élément de guidage 53 se termine par une paroi postérieure transversale 532 servant de butée au porte-capsule dans sa position d'insertion. Un logement 533 en forme de pêne pour recevoir la clé 46 assure définitivement l'engagement correct du porte-capsule en position de référence.

La base de guidage et la base d'alimentation sont articulées d'une part, par un axe d'articulation 86 situé en arrière desdites bases et d'autre part, par un système à genouillère 8 qui comprend deux ailes 80, 81, montées à l'arrière fixement sur le bâti par les axes d'articulation 5a-5c. La base de guidage 51 est ainsi montée sur les ailes latérales 80, 81 par deux axes d'articulation latéraux 800 permettant à la base de guidage de pivoter par rapport aux ailes fixées au bâti. La base d'alimentation de fluide est aussi reliée de chaque côté des ailes par deux articulations 82 guidées dans deux lumières de guidage oblongues arquées 83 ménagées dans lesdites aile 80, 81 du système de genouillère.

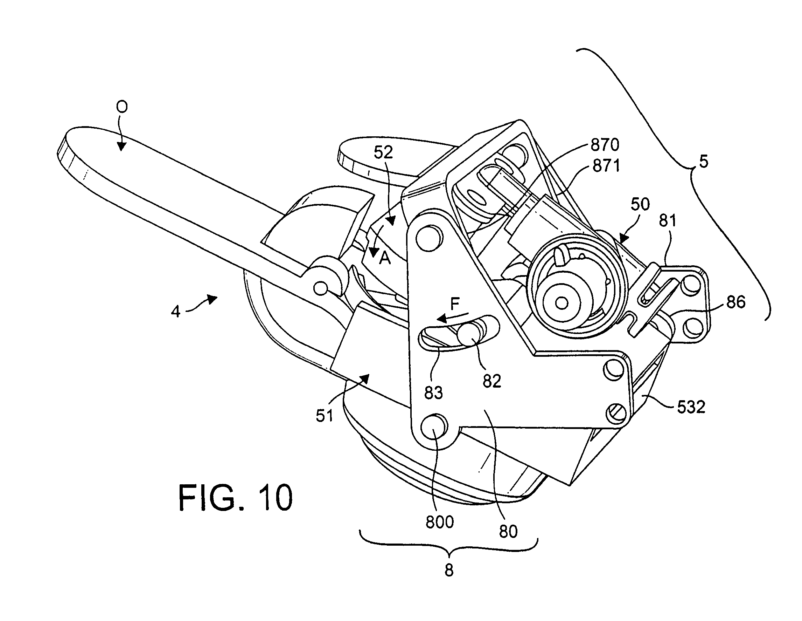

Comme le montre la figure 10, les lumières de guidage 83 sont configurées de telle manière que lorsque le porte-capsule est entraîné manuellement vers le bas (direction O), la base de guidage 51 pivote par rapport aux ailes 80, 81 autour de l'axe 800 et entraîne la base d'alimentation 52 qui se rapproche alors en fermeture de la base de guidage 51 selon la direction représentée par la flèche A puisque les axes 82 sont forcés au guidage dans les lumières 83 dans la direction F.

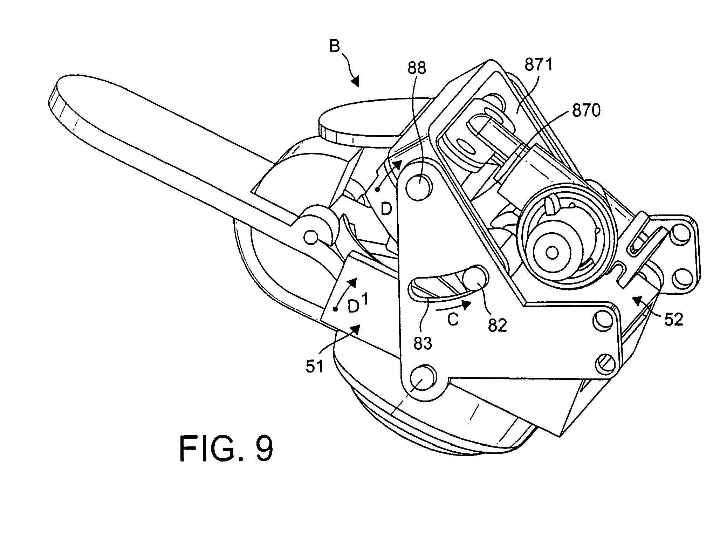

Un levier de réouverture 87 est aussi prévu pour faciliter la réouverture de l'unité d'alimentation. Le levier 87 est en forme d'étrier en U renversé avec deux pattes latérales 870, 871. Les pattes 870, 871 sont montées en pivot selon l'axe 88 sur la partie supérieure des ailes 80, 81 et sont guidées selon les articulations 82 dans les lumières 83. Ainsi, comme le montre la figure 9, lorsque le levier est activé manuellement dans le sens de la flèche B, en particulier vers le bas, les pattes de l'étrier pivotent autour de l'axe 88 et entraîne l'articulation 82 dans la direction C, vers l'arrière; ce qui a pour effet d'entraîner la base d'alimentation 52 vers le haut (Direction D), donc en ré-ouverture. Une fois l'articulation en butée dans la lumière, c'est la base de guidage 51 qui est entraînée vers le haut (Direction D1) pour retrouver la position d'ouverture ou d'insertion du porte-capsule.

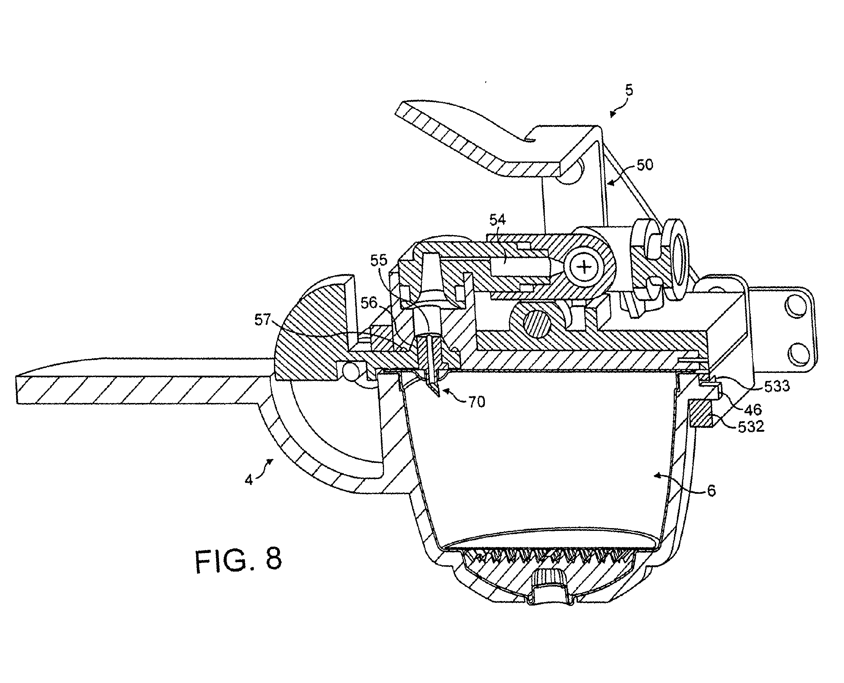

Comme le montre la figure 8, en position de fermeture de l'unité d'alimentation 5 contre le porte-capsule 4, la liaison de fluide est établie. Les moyens d'alimentation en fluide de la base d'alimentation mobile comprennent un connecteur de fluide 50 muni d'un conduit interne 54 pour transporter le fluide jusqu'à une sortie 55 mise en communication avec l'orifice d'entrée 76 de l'injecteur. Pour favoriser une connexion supportant des hautes pressions, le connecteur de l'unité d'alimentation se termine préférentiellement par une portion conique 56 formant une liaison libre cône sur cône avec la portion d'entrée 77 de l'injecteur. Un joint d'étanchéité 57, tel qu'un joint torique, peut être ajouté pour assurer une bonne étanchéité de la liaison.

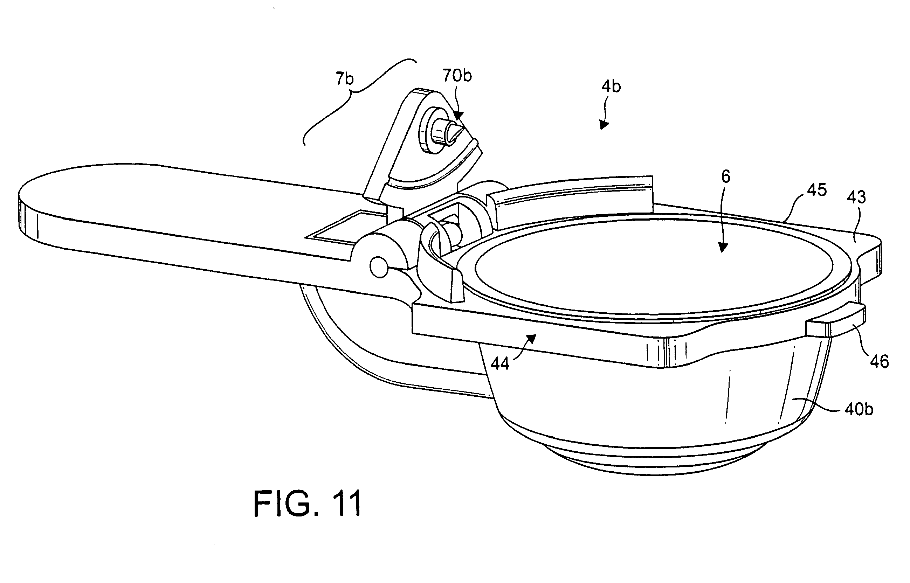

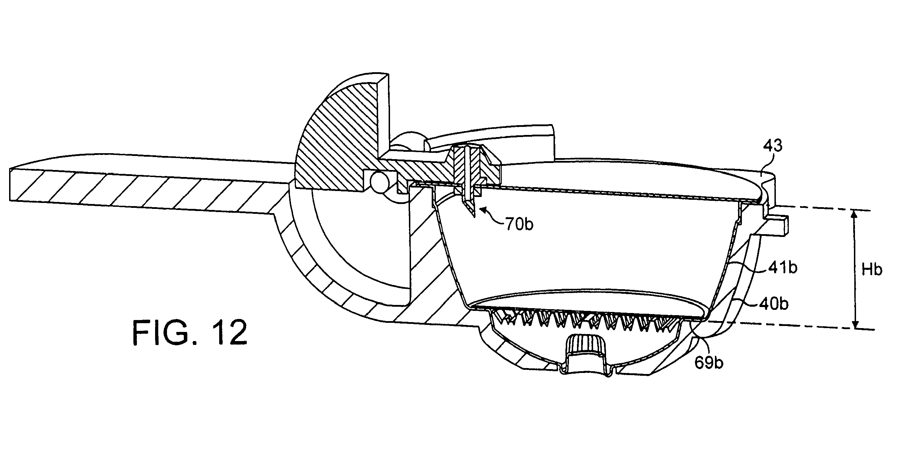

Les figures 11 à 13 montrent un autre type de porte-capsule 4b selon l'invention. Ce porte-capsule 4b est conçu pour s'insérer dans l'unité d'alimentation 5 grâce aux moyens d'engagement complémentaires 44, 45, 46 qui restent identiques aux moyens d'engagement du porte-capsule 4 précédemment décrits. Il en résulte donc que les porte-capsules 4, 4b sont tous deux interchangeables et amovibles par rapport à l'unité d'alimentation 5.

Les portes-capsules 4, 4b possèdent toutefois au moins une caractéristique spécifique qui les distinguent; laquelle caractéristique se rapporte à:
i) la forme et/ou la taille du logement pour recevoir la capsule; et/ou
ii) le mode d'injection selon lequel l'injecteur est configuré pour délivrer le fluide dans la capsule.

Dans l'exemple illustré, le porte-capsule 4b est configuré en terme de volume et de mode d'injection pour recevoir plus particulièrement des capsules contenant des ingrédients nécessitant un faible volume de stockage et un mouillage réparti sur la section transversale du lit de substance. Les ingrédients peuvent être, par exemple, une mouture comme du café ou du thé.

Le porte-capsule 4b comprend ainsi une coupelle 40b qui définit une surface interne ou logement 41 b dont le volume est inférieur au volume de la surface interne ou logement 41 du porte-capsule 4 précédemment décrit. En particulier, la profondeur Hb séparant le bord d'appui interne 69b du bord supérieur 43 est raccourcie par rapport à la même profondeur H de la capsule 4. De ce fait, le porte-capsule reçoit des capsules dont la réserve interne est moins épaisse; ce qui peut être plus approprié par exemple pour extraires des cafés espressos ou longs à partir d'un lit de café moulu.

Au contraire, le porte-capsule 4 de la figure 5 possède, quant à lui, un logement 41 dont la profondeur H est supérieure lui permettant de recevoir des capsules dont le volume de réserve est plus grand; ce qui peut être plus approprié pour stocker une quantité plus importante d'ingrédients, comme de la poudre de lait, et/ou pour délivrer des plus grands volumes de boisson, par exemple, entre 110 et 500 mL de liquide.

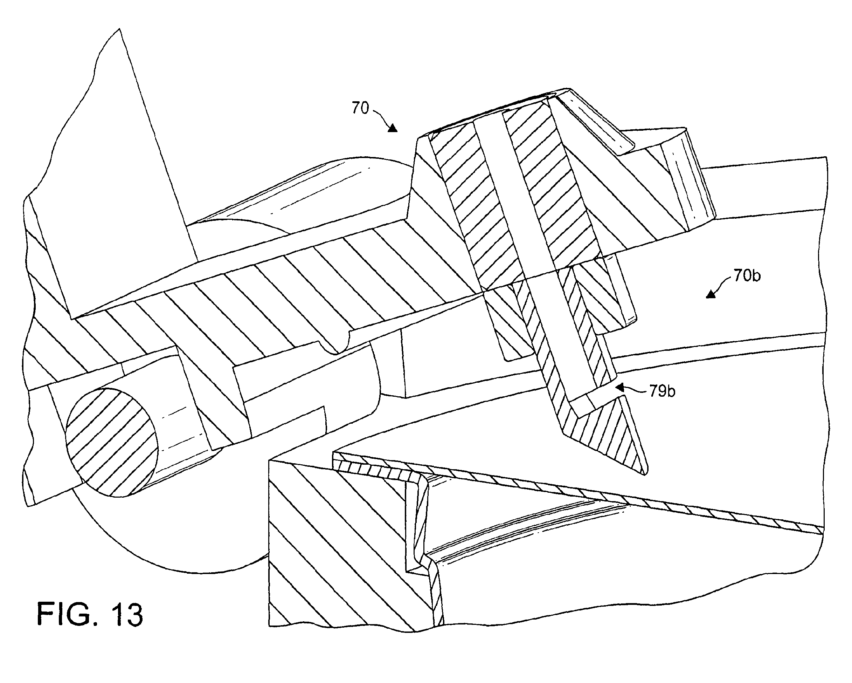

Une autre différence des porte-capsules 4, 4b réside dans le mode d'injection. Le porte-capsule 4b comprend un système d'injection 7b fonctionnant selon le même principe d'insertion dans la capsule que le système d'injection 7 de la capsule 4 mais toutefois avec un injecteur 70b de configuration d'injection différente. Comme le montre la figure 13 en détail, l'injecteur 70b possède un orifice de sortie 79b qui diffère dans sa forme et sa direction. La forme et l'orientation de l'orifice de sortie sont ainsi configurées pour distribuer le fluide de manière plus répartie; c'est à dire, sur une plus large surface de la section transversale; ce qui améliore le mouillage des ingrédients et réduit la formation de chemins préférentiels indésirables. La forme de l'orifice est préférablement une fente intersectant partiellement et transversalement la portion cylindrique de l'injecteur. La direction est aussi orientée plus transversalement dans la capsule. Ainsi, en raison de la forme et de l'orientation, l'effet de jet peut être atténué et le fluide peut traverser le lit d'ingrédients de manière à mouiller de manière plus homogène sur toute la section transversale du lit de substance.

On comprend donc que les porte-capsules sont pourvus de caractéristiques adaptées en fonction, au choix: des ingrédients contenus dans la capsule et/ou encore de la préparation à délivrer. Le dispositif procure donc plus de flexibilité, de facilité d'adaptation et la possibilité de délivrer une plus grande gamme de boissons ou de préparations, incluant, par exemple, des boissons comme le café espresso, café long, café soluble, les spécialités à base de lait comme cappuccino, latte, ou encore du thé, chocolat, ou encore les boissons rafraîchissantes de grands volumes à base de café, thé, lait, cacao, jus de fruits, ou encore des préparations spéciales contenant des ingrédients nutritionnels; par exemple, des formules de produits infantiles, pour sportifs, malades, ou personnes âgées.

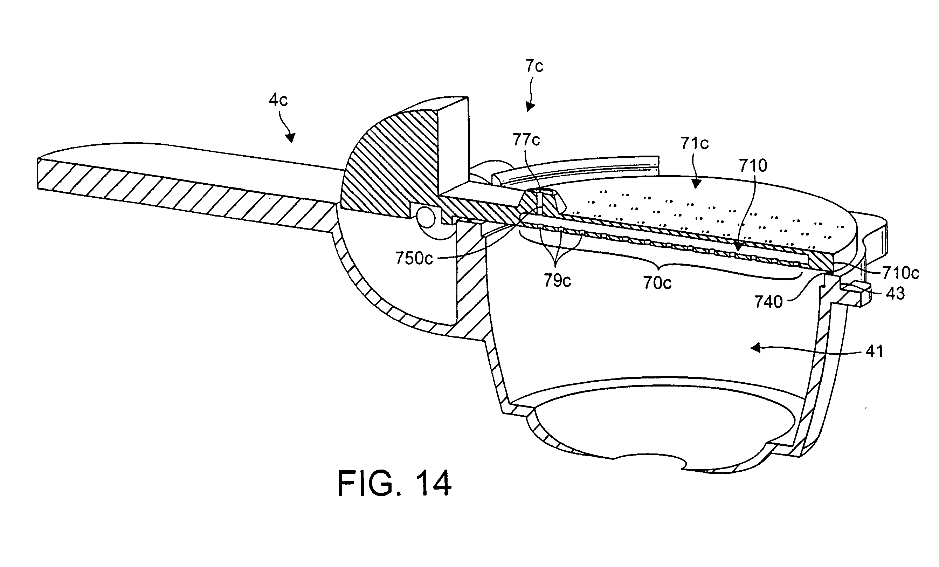

La figure 14 montre un mode de réalisation différent d'un porte-capsule 4c comprenant un système d'injection 7c différent du mode précédent. Dans ce cas, le système d'injection 7c comprend un injecteur 70c sous forme d'une paroi 71 c munie d'un collecteur ou chambre de collecte 710 de fluide. Ce collecteur 710 distribue le fluide au travers d'une multitude d'orifices d'injection 79c débouchant dans le logement 41 du porte-capsule. Un tel porte-capsule peut recevoir une capsule comprenant une surface supérieure perméable au fluide comme un papier-filtre, une paroi textile tissée ou non tissée ou une grille ou simplement une capsule ouverte sur ce côté. Le fluide est distribué comme dans l'injecteur des modes précédents au travers d'une portion d'entrée 77c, un conduit interne 750c débouchant dans le collecteur. L'injecteur 70c est rendu étanche par rapport à la capsule au moyen d'un joint d'étanchéité 740 localisé à l'interface entre le bord 710c de l'injecteur et le bord 43 du porte-capsule. Le joint 740 peut faire partie de l'injecteur lui-même, et/ou du porte-capsule, et/ou de la capsule elle-même. Un tel porte-capsule peut recevoir ainsi des capsules munies de parois filtrantes par exemple.

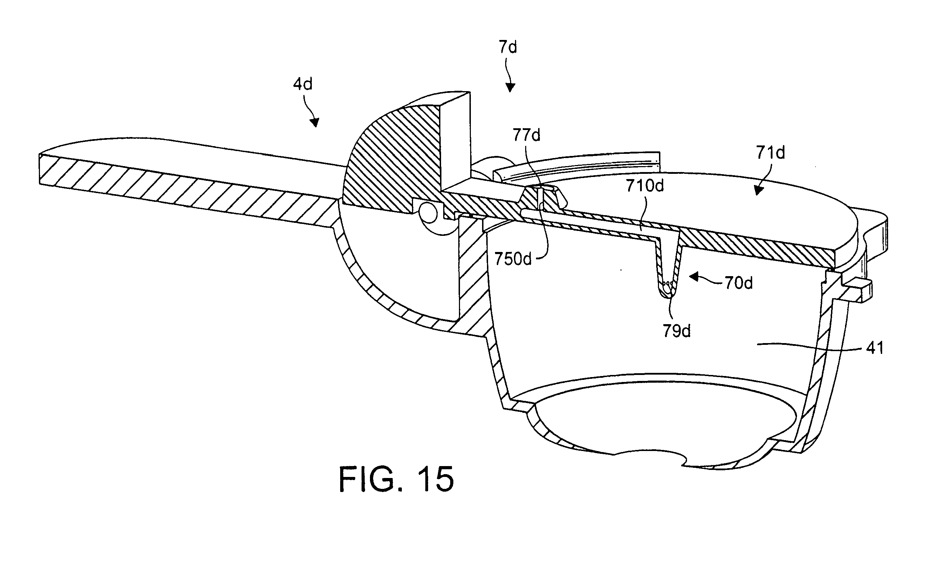

Un autre mode de réalisation de porte-capsule 4d est illustré à la figure 15. Dans ce cas, le système d'injection 7d comprend un injecteur 70d ayant la forme d'un pointeau central, ménagé dans une plaque 71d, qui s'étend à l'intérieur du logement 41 du porte-capsule. Le pointeau distribue le fluide au travers d'orifices d'injection 79d agencés en périphérie du pointeau. Comme dans les modes précédents, le fluide provient d'une portion d'entrée 77d, un conduit interne 750d débouchant dans un collecteur 710d. Les autres éléments du système d'injection restent similaires aux autres modes. Une tel agencement permet une distribution radiale du fluide et à une profondeur voulue dans le logement. Le pointeau peut être perforant ou non perforant selon que la capsule possède une paroi à perforer ou une paroi munie d'une ouverture déjà préformée.

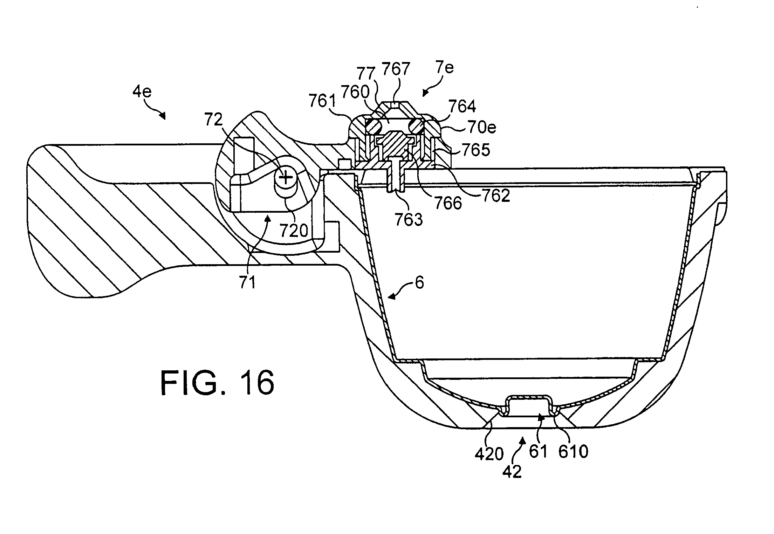

Une autre variante du porte-capsule est illustré à la figure 16. Le porte-capsule 4e se distingue du porte-capsule 4 des figures 3-6 par certaines modifications apportées au système d'injection 7e. Le système comprend un injecteur 70e comprenant un dispositif de valve anti-retour. Une chambre 760 est prévue dans l'injecteur par l'assemblage d'une première pièce supérieure 761 et une seconde pièce inférieure 762 supportant le conduit d'injection 763. La chambre est rendue étanche par un joint torique 764 recouvrant la jonction 765 de la portion d'assemblage (par exemple, un pas de vis) entre les deux pièces. La fermeture de la chambre est opérée par un pointeau 766 lequel est pressé par un élément élastique comme un ressort hélicoïdal (non montré). Lorsque le fluide sous pression entre dans la chambre, le pointeau 766 est repoussé; ce qui comprime le ressort et ouvre l'entrée 767 de la chambre pour permettre le passage du fluide au travers du conduit 763 et donc son introduction dans la capsule 6.

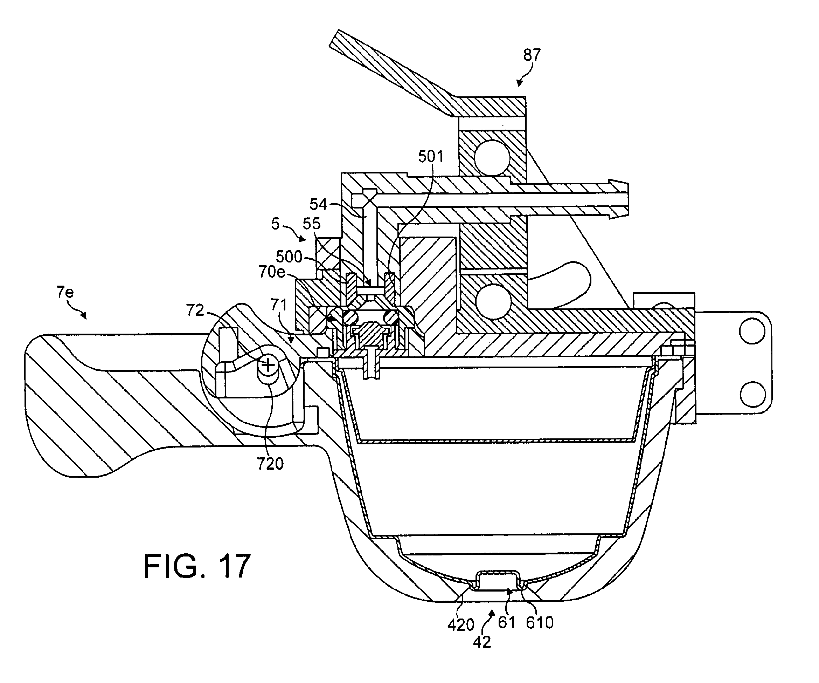

La figure 17 montre la connexion de l'injecteur 70e en communication contre l'unité d'alimentation en fluide 5. Le connecteur de l'unité comprend un élément tubulaire 500 en matériau déformable qui s'écrase, par simple appui, contre la surface conique externe de la portion de connexion de l'injecteur. L'élément tubulaire est inséré dans une gorge 501 ménagée à l'extrémité du conduit d'alimentation de l'unité. L'élément tubulaire 500 délimite la sortie 55 de fluide du conduit 54 de l'unité. Il s'appuie sur les surfaces coniques ou évasées de la portion de connexion 77 de l'injecteur et sert donc, à la fois, de surface d'appui et de raccordement et, à la fois, de joint d'étanchéité. Un tel élément peut être par exemple un tube en élastomère ou silicone dont les extrémités sont droites (non-coniques) ou coniques et se compriment sur la surface de connexion de l'injecteur.

la pièce de support 71 de l'injecteur est montée en rotation selon un axe d'articulation 72 monté dans une lumière de façon à procurer une certaine amplitude de mouvement vertical pour permettre à la pièce de support un certain jeu en basculement latéral; de sorte que la zone d'étanchéité de l'injecteur se positionne plus précisément contre la paroi d'entrée de la capsule. Pour cela, la pièce de support est traversée d'une lumière oblongue 720 orientée verticalement et dans laquelle peut basculer l'axe transversal 72 de maintien de la pièce sur le corps du porte-capsule. On assure ainsi une meilleure étanchéité de l'injection dans la capsule. Le porte capsule 7e présente aussi une poignée en forme de cuvette plus ergonomique facilitant la préhension. Le bord 420 de l'orifice de dégagement 42 présente aussi une découpe en biseau pour venir en retrait du bord 610 dudit l'orifice 61 de la capsule afin d'éviter le contact avec le liquide qui s'écoule et pour aussi faciliter l'évacuation de liquide en cas de contact éventuel avec celui-ci.

L'invention n'est bien entendu pas limitées aux seuls modes de réalisation décrits. Par exemple, d'autres versions de porte-capsules sont envisageables selon les besoins.

## Revendications

1. Dispositif pour la préparation d'une boisson à partir d'une capsule (6) par injection d'un fluide sous pression dans la capsule comprenant une unité d'alimentation en fluide (5) et un injecteur (70) pour injecter du fluide dans la capsule; et comprenant
un porte-capsule (4) configuré pour recevoir une capsule (6); ledit porte-capsule étant amovible par rapport à l'unité d'alimentation (5), **caractérisé en ce que**
l'injecteur (70) est dissociable de l'unité d'alimentation en fluide (5) et fait partie du, ou est rapporté au, porte-capsule (4) et le porte-capsule comprend des moyens de guidage (44, 45) pour l'insertion dans ladite unité.

2. Dispositif selon la revendication 1, **caractérisé en ce que**
l'injecteur (70) comprend au moins un orifice d'injection (79, 79b, 79c, 79d) pour injecter au moins un jet de fluide dans la capsule (6).

3. Dispositif selon les revendications 1 ou 2, **caractérisé en ce que**
l'injecteur (70) comprend un orifice d'entrée de fluide (76) apte à s'associer en étanchéité avec une sortie de fluide (50) de l'unité d'alimentation (5).

4. Dispositif selon la revendication 3, **caractérisé en ce que**
l'injecteur (70) est configurable sur le porte-capsule (4) dans une position de référence par rapport à la capsule qui correspond à la position d'injection.

5. Dispositif selon les revendications 2, 3 ou 4, **caractérisé en ce que**
l'injecteur (70) fait partie d'un système d'injection (7) sur le porte-capsule (4); ledit système (7) rendant mobile l'injecteur (70) entre une position dégagée et une position d'injection dans la capsule.

6. Dispositif selon les revendications 3 ou 4, **caractérisé en ce que**
l'injecteur (70) se raccorde de manière étanche à l'unité d'alimentation en fluide (5) par déplacement relatif d'une partie au moins de l'unité d'alimentation (5) contre l'injecteur (70).

7. Dispositif selon la revendication 6, **caractérisé en ce que**
l'injecteur (70) est configuré en position dégagée pour permettre l'insertion de la capsule (6) dans un logement (41) du porte-capsule (4).

8. Dispositif selon la revendication 7, **caractérisé en ce que** le système d'injection (7) comprend
une pièce de support (71) de l'injecteur qui est montée en rotation sur le bord (43) du logement (41) du porte-capsule (4);
un moyen élastique qui maintient ladite pièce de support (71) en position d'injection;
un moyen d'actionnement (74) pour déplacer la pièce de support (71) et l'injecteur (70) en position dégagée à l'encontre de l'action du moyen élastique.

9. Dispositif selon l'une quelconque des revendications précédentes, **caractérisé en ce que** le porte-capsule (4) comprend un élément allongé (73) formant un manche.

10. Dispositif selon l'une quelconque des revendications précédentes, **caractérisé en ce que**
le porte-capsule (4) et l'unité d'alimentation (5) comprennent des moyens d'engagement complémentaires (44, 45, 46; 53, 530, 531, 533) permettant un positionnement du porte-capsule (4) dans l'unité d'alimentation (5) dans une configuration où l'injecteur (70) est placé en position de référence par rapport aux moyens d'alimentation en fluide (50, 54, 56) de l'unité d'alimentation (5).

11. Dispositif selon la revendication 10, **caractérisé en ce que**
les moyens d'engagement complémentaires comprennent un ensemble complémentaire de bords et de rainures de guidage (44, 45; 530, 531) par lequel le porte-capsule est inséré par glissement dans l'unité d'alimentation selon une direction privilégiée.

12. Dispositif selon la revendication 11, **caractérisé en ce que**
l'unité d'alimentation (5) comprend une base de guidage (51) dans laquelle coopère le porte-capsule (4) en insertion jusqu'à sa position de référence par rapport aux moyens d'alimentation en fluide (50, 54, 56);
une base d'alimentation en fluide (52) comprenant un connecteur de sortie de fluide (56) configuré pour s'associer en connexion avec un connecteur complémentaire (77) de l'injecteur (70);
ladite base d'alimentation (52) étant mobile relativement à la base de guidage (51) d'une position désengagée des connecteurs (56, 77) à une position d'étanchéité engagée des connecteurs (56, 77).

13. Dispositif selon la revendication 12, **caractérisé en ce que**
la base d'alimentation en fluide (52) de l'unité d'alimentation (5) est articulée à la base de guidage (51) par un système à genouillère (8); de telle façon qu'un appui dans une direction privilégiée et distincte de la direction d'insertion établi sur le porte-capsule (4) provoque la fermeture de ladite base d'alimentation (52) relativement à ladite base de guidage (51) jusqu'à la position engagée des connecteurs (56, 57).

14. Distributeur de boissons (1) comprenant un dispositif (2) selon l'une quelconque des revendication précédentes.

## Claims

1. Device for preparation of a drink from a capsule (6), by injection of a pressurised fluid into the capsule, comprising a fluid supply unit (5) and an injector (70) in order to inject fluid into the capsule; and comprising a capsule-holder (4) which is configured to receive a capsule (6); the said capsule-holder being removable from the supply unit (5), **characterised in that** the injector (70) can be separated from the fluid supply unit (5) and forms part of, or is attached to the capsule-holder (4), and the capsule-holder comprises guide means (44, 45) for insertion into the said unit.

2. Device according to claim 1, **characterised in that** the injector (70) comprises at least one injection aperture (79, 79b, 79c, 79d) in order to inject at least one jet of fluid into the capsule (6).

3. Device according to claim 1 or claim 2, **characterised in that** the injector (70) comprises a fluid intake aperture (76) which can be associated in a sealed manner with a fluid outlet (50) of the supply unit (5).

4. Device according to claim 3, **characterised in that** the injector (70) can be configured on the capsule-holder (4) in a reference position relative to the capsule which corresponds to the injection position.

5. Device according to claims 2, 3 or 4, **characterised in that** the injector (70) forms part of an injection system (7) on the capsule-holder (4); the said system (7) making the injector (70) mobile between a released position and a position of injection into the capsule.

6. Device according to claim 3 or claim 4, **characterised in that** the injector (70) is connected in a sealed manner to the fluid supply unit (5) by relative displacement of at least part of the supply unit (5) against the injector (70).

7. Device according to claim 6, **characterised in that** the injector (70) is configured in the released position such as to permit the insertion of the capsule (6) into a receptacle (41) of the capsule-holder (4).

8. Device according to claim 7, **characterised in that** the injection system (7) comprises:
a support part (71) for the injector, which is fitted such as to rotate on the edge (43) of the receptacle (41) of the capsule-holder (4);
a resilient means which retains the said support part (71) in the injection position; and
an actuating means (74) to displace the support part (71) and the injector (70) in the released position, against the action of the resilient means.

9. Device according to any one of the preceding claims, **characterised in that** the capsule-holder (4) comprises an elongate element (73) which forms a sleeve.

10. Device according to any one of the preceding claims, **characterised in that** the capsule-holder (4) and the supply unit (5) comprise complementary engagement means (44, 45, 46; 53, 530, 531, 533) which permit positioning of the capsule-holder (4) in the supply unit (5), in a configuration in which the injector (70) is placed in a reference position relative to the fluid supply means (50, 54, 56) of the supply unit (5).

11. Device according to claim 10, **characterised in that** the complementary engagement means comprise a complementary assembly of edges and guide grooves (44, 45; 530, 531) by means of which the capsule-holder is inserted by being slid into the supply unit, according to a preferential direction.

12. Device according to claim 11, **characterised in that** the supply unit (5) comprises a guide base (51) in which the capsule-holder (4) co-operates in insertion, until it reaches its reference position relative to the fluid supply means (50, 54, 56);
a fluid supply base (52) comprising a fluid outlet connector (56), which is configured such as to be associated in connection with a complementary connector (77) of the injector (70); and
the said supply case (52) being mobile relative to the guide base (51), from a released position of the connectors (56, 77) to an engaged, sealed position of the connectors (56, 77).

13. Device according to claim 12, **characterised in that** the fluid supply base (52) of the supply unit (5) is articulated to the guide base (51) by means of an articulated lever system (8), such that support in a preferential direction, which is distinct from the direction of insertion established on the capsule-holder (4), gives rise to closure of the said supply base (52) relative to the said guide base (51), as far as the engaged position of the connectors (56, 57).

14. Drinks distributor (1) comprising a device (2) according to any one of the preceding claims.

## Patentansprüche

1. Vorrichtung zur Herstellung eines Getränks aus einer Kapsel (6) durch Einspritzen eines unter Druck stehenden Fluids in die Kapsel, umfassend eine Fluidversorgungseinheit (5) und eine Einspritzdüse (70) zum Einspritzen des Fluids in die Kapsel und umfassend einen Kapselhalter (4), der dafür ausgebildet ist, eine Kapsel (6) aufzunehmen, wobei der Kapselhalter bezüglich der Versorgungseinheit (5) abnehmbar ist, **dadurch gekennzeichnet, dass** die Einspritzdüse (70) von der Fluidversorgungseinheit (5) trennbar ist und einen Teil des Kapselhalters (4) bildet oder an diesem angebracht ist und der Kapselhalter Führungsmittel (44, 45) für die Einführung in die Einheit umfasst.

2. Vorrichtung nach Anspruch 1, **dadurch gekennzeichnet, dass** die Einspritzdüse (70) mindestens eine Einspritzöffnung (79, 79b, 79c, 79d) zum Einspritzen mindestens eines Fluidstrahls in die Kapsel (6) umfasst.

3. Vorrichtung nach den Ansprüchen 1 oder 2, **dadurch gekennzeichnet, dass** die Einspritzdüse (70) eine Fluideintrittsöffnung (76) umfasst, die mit einem Fluidaustritt (50) der Versorgungseinheit (5) dicht verbunden werden kann.

4. Vorrichtung nach Anspruch 3, **dadurch gekennzeichnet, dass** die Einspritzdüse (70) auf dem Kapselhalter (4) in einer der Einspritzstellung entsprechenden Bezugsstellung bezüglich der Kapsel konfigurierbar ist.

5. Vorrichtung nach den Ansprüchen 2, 3 oder 4, **dadurch gekennzeichnet, dass** die Einspritzdüse (70) einen Teil eines Einspritzsystems (7) auf dem Kapselhalter (4) bildet, wobei das System (7) die Einspritzdüse (70) zwischen einer ausgerückten Stellung und einer Stellung der Einspritzung in die Kapsel beweglich macht.

6. Vorrichtung nach den Ansprüchen 3 oder 4, **dadurch gekennzeichnet, dass** die Einspritzdüse (70) an die Fluidversorgungseinheit (5) durch eine Relativbewegung mindestens eines Teils der Versorgungseinheit (5) zu der Einspritzdüse (70) dicht angeschlossen wird.

7. Vorrichtung nach Anspruch 6, **dadurch gekennzeichnet, dass** die Einspritzdüse (70) in der ausgerückten Stellung konfiguriert ist, um die Einführung der Kapsel (6) in eine Aussparung (41) des Kapselhalters (4) zu gestatten.

8. Vorrichtung nach Anspruch 7, **dadurch gekennzeichnet, dass** das Einspritzsystem (7) umfasst:
ein Teil (71) zum Tragen der Einspritzdüse, das auf dem Rand (43) der Aussparung (41) des Kapselhalters (4) drehbar angeordnet ist,
ein elastisches Mittel, das das Tragteil (71) in Einspritzstellung hält,
ein Betätigungsmittel (74) zum Bewegen des Tragteils (71) und der Einspritzdüse (70) in die ausgerückte Stellung entgegen der Wirkung des elastischen Mittels.

9. Vorrichtung nach einem der vorhergehenden Ansprüche, **dadurch gekennzeichnet, dass** der Kapselhalter (4) ein langgestrecktes, einen Stiel bildendes Element (73) umfasst.

10. Vorrichtung nach einem der vorhergehenden Ansprüche, **dadurch gekennzeichnet, dass** der Kapselhalter (4) und die Versorgungseinheit (5) einander ergänzende Eingriffsmittel (44, 45, 46; 53, 530, 531, 533) umfassen, die eine Positionierung des Kapselhalters (4) in der Versorgungseinheit (5) in einer Konfiguration gestatten, in der die Einspritzdüse (70) in der Bezugsstellung bezüglich der Fluidversorgungsmittel (50, 54, 56) der Versorgungseinheit (5) angeordnet ist.

11. Vorrichtung nach Anspruch 10, **dadurch gekennzeichnet, dass** die einander ergänzenden Eingriffsmittel einen Satz von einander ergänzenden Rändern und Führungsnuten (44, 45; 530, 531) umfassen, über den der Kapselhalter in die Versorgungseinheit in einer bevorzugten Richtung eingeschoben wird.

12. Vorrichtung nach Anspruch 11, **dadurch gekennzeichnet, dass** die Versorgungseinheit (5) umfasst:
eine Führungsbasis (51), mit der der Kapselhalter (4) zusammenwirkt, indem er in seine Bezugsstellung bezüglich der Fluidversorgungsmittel (50, 54, 56) eingeführt wird,
eine Fluidversorgungsbasis (52), die einen Fluidaustrittsverbinder (56) umfasst, der konfiguriert ist, um mit einem ergänzenden Verbinder (77) der Einspritzdüse (70) verbunden zu werden,
wobei die Versorgungsbasis (52) bezüglich der Führungsbasis (51) von einer ausgerückten Stellung der Verbinder (56, 77) in eine eingerückte Abdichtungsstellung der Verbinder (56, 77) beweglich ist.

13. Vorrichtung nach Anspruch 12, **dadurch gekennzeichnet, dass** die Fluidversorgungsbasis (52) der Versorgungseinheit (5) an der Führungsbasis (51) über ein Kniegelenksystem (8) so angelenkt ist, dass ein Druck, der auf den Kapselhalter (4) in einer bevorzugten, von der Einschubrichtung verschiedenen Richtung ausgeübt wird, die Schließung der Versorgungsbasis (52) bezüglich der Führungsbasis (51) bis in die eingerückte Stellung der Verbinder (56, 57) bewirkt.

14. Getränkespender (1), umfassend eine Vorrichtung nach einem der vorhergehenden Ansprüche.
